# EUROPEAN PATENT APPLICATION

(11) **EP 4 270 609 A1**
(43) Date of publication of application: **01.11.2023**
(21) Application number: 21965115.5
(22) Date of filing: 25.11.2021
(51) Int. Cl.: H01M 50/103

(54) **BATTERY AND MANUFACTURING METHOD AND MANUFACTURING SYSTEM THEREFOR, AND ELECTRICAL EQUIPMENT**

(71) Applicant: Contemporary Amperex Technology Co., Limited, Ningde, Fujian 352100 (CN)
(72) Inventor: WANG, Zhi, Ningde, Fujian 352100 (CN); HE, Runyong, Ningde, Fujian 352100 (CN); QIN, Feng, Ningde, Fujian 352100 (CN); WANG, Peng, Ningde, Fujian 352100 (CN); FANG, Zhengyu, Ningde, Fujian 352100 (CN); JI, Hongye, Ningde, Fujian 352100 (CN)
(74) Representative: Ziebig Hengelhaupt Intellectual Property Attorneys Patentanwaltskanzlei PartGmbB
(86) International application number: PCT/CN2021/133091
(87) International publication number: WO 2023/092379

(57) **Abstract**

The application provides a battery, a manufacturing method and manufacturing system thereof and an electric device. The battery includes a case, a plurality of battery cells, and a fixation plate. In a first direction, the battery cells are sequentially arranged with side surfaces facing towards each other, and in a second direction, the battery cells are sequentially arranged with end surfaces facing towards each other. The fixation plate is disposed on at least one of the end surfaces of the plurality of battery cells for fixing the battery cells. In a third direction, the fixation plate connects the first portion of the case and connects the second portion. Each two of the first direction, the second direction and the third direction are perpendicular to each other. In the battery provided by the application, at least one end surface of the battery cell is provided with a fixation plate, so as to enable connection and fixing of the battery cells and the case, and the connection positions of the fixation plate and the case are also spaced apart with a small spacing distance. The connection strength of the fixation plate and the case can be effectively increased by virtue of the rigidity of the case, and an effective limiting function can be formed on the battery cells, thereby reducing the risk of the battery shaking during use and increasing the service life of the battery.

## Description

### TECHNICAL FIELD

The application relates to the field of battery technology, and in particular to a battery, a manufacturing method and manufacturing system thereof and an electric device.

### BACKGROUND

Batteries are widely used in electronic equipments such as mobile phones, laptop computers, electric bicycles, electric automobiles, electric aircrafts, electric ships, electric toy cars, electric toy ships, electric toy planes, and electric tools etc. Battery cells may include nickel-cadmium battery cells, nickel-hydrogen battery cells, lithium-ion battery cells, secondary alkaline zinc-manganese battery cells etc.

In the development of battery technology, in addition to improving the performance of the batteries, it is also a non-negligible problem how to increase the service life of the batteries. Increasing the service life of the batteries has a significant impact on energy conservation. Therefore, how to increase the service life of the battery is a technical problem to be continuously improved in the battery technology.

### SUMMARY

The application provides a battery, a manufacturing method and manufacturing system thereof and an electric device, which can increase the service life of the battery.

In a first aspect, an embodiment of the application provides a battery comprising: a case comprise a first portion and a second portion, the second portion and the first portion being capped by each other and forming an accommodation cavity; a plurality of battery cells, in a first direction, the battery cells being sequentially arranged with side surfaces facing towards each other, in a second direction, the battery cells being sequentially arranged with end surfaces facing towards each other; and a fixation plate disposed on at least one of the end surfaces of the plurality of battery cells and for fixing the battery cells, in a third direction, the fixation plate connecting the first portion and connecting the second portion, each two of the first direction, the second direction and the third direction being perpendicular to each other.

In the battery provided by the embodiment of the application, at least one end surface of the battery cell is provided with a fixation plate and the fixation plate is arranged to connect the first portion and the second portion of the case, so as to enable connection and fixing of the battery cells and the case. Since the fixation plates are spaced apart in the second direction, the connection positions of the fixation plates and the case are also spaced apart with a small spacing distance, In this arrangement, the connection strength and rigidity of the fixation plate and the case can be effectively increased by virtue of the rigidity of the case, and an effective limiting function can be formed on the battery cells, thereby reducing the risk of the battery shaking during use and increasing the service life of the battery.

In some embodiments, the fixation plate extends in the first direction, and the battery cells of the battery arranged in the first direction are fixed to the fixation plate. It is advantageous for improving the connection strength between the battery cells and the fixation plate.

In some embodiments, the fixation plate and the first portion are adhesively connected continuously at least in part in the first direction; and/or the fixation plate and the second portion are adhesively connected continuously at least in part in the first direction. Such arrangement can further increase the connection strength between the fixation plate and the case.

In some embodiments, a surface of the fixation plate facing towards the first portion is formed with a first groove for accommodating adhesive glue; and/or a surface of the fixation plate facing towards the second portion is formed with a second groove for accommodating adhesive glue. The fixation plate and the case are arranged to be adhesively connected, so that the connection occupies a small space and does not interfere with other structures. And the structural integrity of the fixation plate and the case is ensured, and the structural strength of the fixation plate and the case is improved.

In some embodiments, the first groove has a depth h₁ satisfying: 0.2mm≤h₁≤5mm; and/or the second groove has a depth h₂ satisfying: 0.2mm≤h₂≤5mm. In this way, the adhesive strength between the fixation plate and the case can be ensured, while the machinability of the fixation plate can be improved.

In some embodiments, in the second direction, the adjacent battery cells are fixedly connected to the fixation plates respectively, and the adjacent fixation plates are fixedly connected to each other. It further increases the connection strength of the internal structure of the battery, and the fixation plates have a better limiting effect on the battery cells.

In some embodiments, the battery cell includes electrode terminals protruding from the end surface. The fixation plate is provided with a through hole, the end surface abuts the fixation plate, and at least a part of the electrode terminal is accommodated in the through hole. It thereby facilitates electrical connection between the electrode terminals adjacent in the second direction, and the through hole has a better limiting effect on the battery cell.

In some embodiments, the end surface is adhered to the fixation plate. A first surface of the fixation plate fixedly connected to the end surface of the battery cell facing away from the end surface is provided with a first recess, and the through hole penetrates a bottom wall of the first recess. In this way, the compactness of the internal structure of the battery can be improved, and the volumetric energy density of the battery can be increased.

In some embodiments, the electrode terminal connected to the fixation plate at least partially protrudes from a bottom wall of the first recess and is accommodated in the first recess, and does not go beyond the first surface. It is advantageous for positioning the battery cells by the fixation plate, and the electrode terminals in the first recess can be more conveniently connected by a bus member.

In some embodiments, the first recess has a depth h₃ satisfying: 5mm≤h₃≤10mm. Such arrangement may provide structural compactness for the battery.

In some embodiments, the first surface is further provided with a second recess disposed outside the first recess in the third direction and used to accommodate adhesive glue for connecting the adjacent fixation plates to each other. It is advantageous to improve the adhesive strength between the fixation plates, and the adhesive connection reduces the space occupied by the battery in the second direction.

In some embodiments, the second recess has a depth h₄ satisfying: 0.2mm≤h₄≤5mm. Such arrangement improves the machinability of the fixation plate while ensuing the adhesive strength between the fixation plate and the case.

In some embodiments, the fixation plate fixedly connected to the end surfaces of the battery cells includes a second surface facing towards the end surfaces, and the second surface is provided with a third recess. The end surfaces are accommodated in the third recess and adhered to a bottom wall of the third recess. Such arrangement can improve the connection strength between the battery cells and the fixation plate, further reduce the risk of the battery cells shaking with respect to the fixation plate, and increase the structural stability of the battery.

In some embodiments, the through holes correspond to the electrode terminals of the battery cells one by one. It facilitates better fitting of the fixation plate and the end surfaces of the battery cells, improving the limiting effect in the battery cells.

In a second aspect, an embodiment of the application provides an electric device including the battery according to any embodiment of the first aspect.

In a third aspect, an embodiment of the application provides a manufacturing method for a battery, comprising: providing a case comprising a first portion and a second portion; providing a plurality of battery cells; providing a fixation plate; assembling the plurality of battery cells and the fixation plate, wherein in a first direction, the battery cells are sequentially arranged with side surfaces facing towards each other, in a second direction, the battery cells are sequentially arranged with end surfaces facing towards each other, and the fixation plate is disposed on at least one of the end surfaces of the plurality of battery cells and is used for fixing the battery cells; placing the assembled plurality of battery cells and the fixation plate on the first portion and capping the second portion to the first portion, wherein in a third direction, the fixation plate connects the first portion and connects the second portion, and each two of the first direction, the second direction and the third direction are perpendicular to each other.

In a fourth aspect, an embodiment of the application provides a manufacturing system for a battery, comprising: a first providing device for providing a case comprising a first portion and a second portion; a second providing device for providing a plurality of battery cells; a third providing device for providing a fixation plate; a first assembling device for assembling the plurality of battery cells and the fixation plate, wherein in a first direction, the battery cells are sequentially arranged with side surfaces to facing towards each other, in a second direction, the battery cells are sequentially arranged with end surfaces facing towards each other, and the fixation plate is disposed on at least one of the end surfaces of the plurality of battery cells and is used for fixing the battery cells; a second assembling device for placing the assembled plurality of battery cells and the fixation plate on the first portion and capping the second portion to the first portion, wherein in a third direction, the fixation plate connects the first portion and connects the second portion, and each two of the first direction, the second direction and the third direction are perpendicular to each other.

### BRIEF DESCRIPTION OF THE DRAWINGS

In order to illustrate the technical solutions in embodiments of the application more clearly, the drawings to be used in the embodiments of the application will be briefly described below. Obviously, the drawings described below are merely some embodiments of the application, and it is also possible for a person of ordinary skill in the art to obtain further drawings from these drawings without creative work.
Fig. 1 is a schematic structural view of a vehicle provided by an embodiment of the application;
Fig. 2 is a schematic explosive view of a battery provided by an embodiment of the application;
Fig. 3 is a schematic view of a mounting structure of battery cells and a fixation plate in a battery provided by an embodiment of the application;
Fig. 4 is a schematic explosive view of a battery cell provided by an embodiment of the application;
Fig. 5 is a schematic structural section view of a battery of an embodiment of the application;
Fig. 6 is a partial enlarged view at A in Fig. 5;
Fig. 7 is a schematic structural view at a perspective of a fixation plate in a battery provided by an embodiment of the application;
Fig. 8 is a schematic structural view at another perspective of a fixation plate in a battery provided by an embodiment of the application;
Fig. 9 is a front view of a fixation plate in a battery provided by an embodiment of the application;
FIG. 10 is a schematic structural section view along B-B in FIG. 9;
Fig. 11 is a schematic flow chart of a manufacturing method of a battery provided by an embodiment of the application;
Fig. 12 is a schematic block diagram of a manufacturing system of a battery provided by an embodiment of the application.

The views are not necessarily plotted in actual proportion in the drawings.

### LIST OF REFERENCES

1 vehicle;
2 battery; 21 case; 211 first portion; 212 second portion; 21a accommodation cavity;
3 battery cell; 3a side surface; 3b end surface; 11 housing assembly; 111 housing body; 112 cap assembly; 1121 electrode terminal; 1122 end cap; 12 electrode assembly;
4 fixation plate; 4a first groove; 4b second groove; 4c through hole; 41 first surface; 41a first recess; 41b second recess; 42 second surface; 42a third surface;
5 controller;
6 motor;
100 control system; 110 first supply device; 120 second supply device; 130 third supply device; 140 first assembling device; 150 second assembling device.
X first direction; Y second direction; Z third direction.

### DETAILED DESCRIPTION

In order to make the purpose, the solution and the advantages of the embodiments of the application clearer, the technical solution of the embodiments of the application will be described clearly below with reference to the accompanying drawings. It is obvious that the embodiments as described are only a part of the embodiments of the application, rather than all of the embodiments. Based on the embodiments of the application, all other embodiments obtained by a person of ordinary skill in the art without creative efforts shall fall within the protection scope of the application.

Unless otherwise defined, all the technical and scientific terms used in the application have the same meanings as commonly understood by a person skilled in the art of the application. The terms used in the description of this application is for the purpose of describing specific embodiments only and is not intended to limit the application. The terms "comprise", "have" and any variations thereof in the description and claims of the application and the brief description of the drawings above are intended to cover non-exclusive inclusions. The terms "first", "second" and the like in the description and claims of the application or in the aforesaid drawings are used to distinguish different objects and are not used to describe a particular order or primary-secondary relationship.

Reference to "embodiment" in the application means that the specific features, structures, or characteristics described in connection with the embodiment may be included in at least one embodiment of the application. The presence of this phrase at various locations in the description does not necessarily refer to the same embodiment, nor is it a separate or alternative embodiment that is mutually exclusive from other embodiments.

In the description of the application, it is noted that, except as otherwise stipulated or limited explicitly, the terms "mount", "link", "connect", "attach" shall be interpreted expansively, for example, it may be fixed connection, removable connection or integral connection; may be direct connection or indirect connection via an intermediate medium, or may be communication inside two elements. For a person of ordinary skill in the art, the specific meaning of the above terms in the application can be interpreted depending on the specific situation.

In the application, the term "and/or" is merely to describe an association relationship of associated objects, meaning that there may be three relationship, for example, C and/or D may mean three cases that C exists alone, C and D exist simultaneously, and D exists alone. In addition, the character "/" in the application generally indicates that the related objects before and after have an "or" relationship.

In the embodiments of the application, the same reference numerals denote the same components, and in the different embodiments, detailed description of the same components is omitted for brevity. It should be understood that the thickness, length, width, and the like of the various components, and the overall thickness, length, width, and the like of the integrated device in the embodiments of the application shown in the drawings are merely illustrative and should not be construed as limiting of the application.

Reference to "a plurality of" in the application means two or more (including two).

In the application, the battery cell may include a lithium ion secondary battery cell, a lithium ion primary battery cell, a lithium sulfur battery cell, a sodium lithium ion battery cell, a sodium ion battery cell, a magnesium ion battery cell, or the like, which is not limited by the embodiments of the application. The battery cell may be in the form of a cylinder, a flat body, a cuboid, or other shape, which is not limited by the embodiments of the application. The battery cell are generally divided into three types in terms of packaging manner: cylindrical battery cell, cuboid battery cell and soft-pack battery cell, which is not limited by the embodiments of the application.

The battery mentioned in the embodiments of the application refers to a single physical module including one or more battery cells to provide higher voltage and capacity. For example, the battery mentioned in the application may include a battery module or a battery pack or the like. The battery generally includes a case for packaging one or more battery cells. The case can prevent liquid or other foreign matter from affecting the charging or discharging of the battery cell.

The battery cell includes an electrode assembly and electrolyte, and the electrode includes a positive electrode sheet, a negative electrode sheet, and a separator. The battery cell operates mainly by moving metal ions between the positive and negative electrode sheets. The positive electrode sheet includes a positive electrode current collector and a positive electrode active material layer coated on a surface of the positive electrode current collector. The positive electrode current collector includes a positive electrode current collecting portion and a positive electrode protrusion protruding from the positive electrode current collecting portion. The positive electrode current collecting portion is coated with a positive electrode active material layer. At least a part of the positive electrode protrusion is not coated with the positive electrode active material layer. The positive electrode protrusion serves as a positive electrode tab. Taking a lithium ion battery as an example, the material of the positive electrode current collector may be aluminum, the positive electrode active material layer includes a positive electrode active material, and the positive electrode active material may be lithium cobaltate, lithium iron phosphate, lithium ternary or lithium manganate, or the like. The negative electrode sheet includes a negative electrode current collector and a negative electrode active material layer coated on a surface of the negative electrode current collector. The negative electrode current collector includes a negative electrode current collecting portion and a negative electrode protrusion protruding from the negative electrode current collecting portion. The negative electrode current collecting portion is coated with a negative electrode active material layer. At least a part of the negative electrode protrusion is not coated with the negative electrode active material layer. The negative electrode protrusion serves as a negative electrode tab. The material of the negative electrode current collector may be copper, the negative electrode active material layer includes a negative electrode active material, and the negative electrode active material may be carbon, silicon, or the like. In order to ensure that a large current does not cause fusing, there are a plurality of positive electrode tabs stacked together, and there are a plurality of negative electrode tabs stacked together. The material of the separator may be PP (polypropylene) or PE (polyethylene) or the like. In addition, the electrode assembly may be of a wound structure or a laminated structure, which is not limited by the embodiments of the application.

The battery cell may further include a housing assembly having an accommodation cavity inside. The accommodation cavity is an enclosed space provided by the housing assembly for the electrode assembly and the electrolyte.

For the group structure of some battery cells (cylindrical battery cells or cuboid battery cells) with two poles at both ends, a "lying-flat" arrangement of battery cells can be adopted. In the arrangement, the poles go out of two end caps of each battery cell, a plurality of battery cells are connected in series end to end to form a battery cell string, a plurality of strings of battery cells are arranged in a direction perpendicular to the series connection direction to form a battery cell array, and a plurality of battery cell arrays may be stacked to form a final battery structure. In the flat battery structure, the connection strength is weak at the series connection of the battery cells, and a separation plate is usually used to increase the connection strength, and the two ends of the separation plate are fixed on the case. However, when there are many battery strings, the separation plate will be very long. Such structure will also cause the problem that the separation plate is deformed to intensify the vibration amplitude of the battery, thereby affecting service life of the battery.

After discovering the problem that the service life of the battery is not high, the inventor has systematically analyzed and studied the structure of the battery and the manufacturing method thereof. The results show that during the use of the battery, the battery cells are fixedly connected with the case only by the two ends of the separation plate, and the connection is not stable enough. The connection structure is of a point connection, and the connection strength between the case and the battery cell is low. After long-term use, frequent vibration will lead to failure of the fixed connection, thereby causing failure of the connection between the battery cell and the case, causing the battery cell to shake in the case, thus affecting service life of the battery.

Based on the above problems discovered by the inventor, the inventor has improved the structure of the battery. The technical solutions described in the embodiments of the application are applicable to batteries and electric devices employing batteries.

The electric device may be a vehicle, a mobile phone, a portable device, a notebook computer, a ship, a spacecraft, an electric toy and a power tool, etc. The vehicle may be a fuel, gas or new energy vehicle. The new energy vehicle may be a pure electric vehicle, a hybrid vehicle, an extended-range vehicle, etc. The spacecraft includes an airplane, a rocket, an aerospaceplane, a spaceship, etc. The electric toy includes a fixed or movable electric toy, for example, a game machine, an electric car toy, an electric ship toy, and an electric airplane toy, etc. The power tool includes a metal cutting power tool, a grinding power tool, an assembly power tool, and a railway power tool, for example, an electric drill, an electric grinder, an electric wrench, an electric screwdriver, an electric hammer, an impact electric drill, a concrete vibrator and an electric planer, etc. The embodiments of the application have no particular limitation to the above electric device.

For ease of description, the following embodiments take a vehicle as an example of the electric device for explanation.

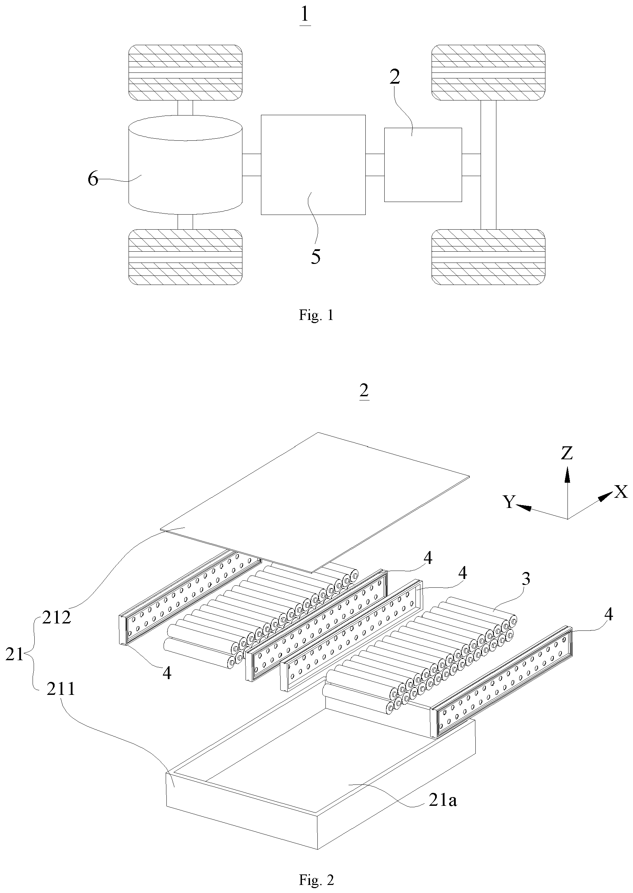

Fig. 1 is a schematic structural view of a vehicle 1 provided by some embodiments of the application. As shown in Fig. 1, a battery 2 is provided inside the vehicle 1, and the battery 2 may be disposed at a bottom or a head or a rear of the vehicle 1. The battery 2 may be used for powering the vehicle 1. For example, the battery 2 may serve as an operational power source for the vehicle 1.

The vehicle 1 may also include a controller 5 and a motor 6. The controller 5 is used for controlling the battery 2 to power the motor 6, for example, for operational power requirements during start-up, navigation and traveling of the vehicle 1.

In some embodiments of the application, the battery 2 may serve not only as an operational power source for the vehicle 1, but also as a drive power source for the vehicle 1 to provide a drive power for the vehicle 1 instead of or partially instead of fuel or natural gas.

Fig. 2 is a schematic explosive view of a battery 2 provided by some embodiments of the application. As shown in Fig. 2, the battery 2 includes a case 21 and a battery cell 3, and the battery cell 3 is accommodated in the case 21.

The case 21 is used for accommodating the battery cell 3, and the case 21 may have various structures. In some embodiments, the case 21 may include a first portion 211 and a second portion 212 capped by each other. The first portion 211 and the second portion 212 together define an accommodation cavity 21a for accommodating the battery cell 3. The first portion 211 may be of a hollow structure with one end open, the second portion 212 may be of a plate-like structure, and the second portion 212 may cap the open side of the first portion 211 to form the case 21 with the accommodation cavity 21a. Also, each of the first portion 211 and the second portion 212 may be of a hollow structure with one side open, and the open side of the first portion 211 caps the open side of the second portion 212 to form the case 21 with the accommodation cavity 21a. Of course, the first portion 211 and the second portion 212 may have various shapes, such as a cylinder, a cuboid and the like.

In order to increase the seal property after the first portion 211 and the second portion 212 are connected, a seal member, such as seal glue or a seal ring, may be provided between the first portion 211 and the second portion 212.

When the first portion 211 is capped on the top of the second portion 212, the first portion 211 may also be referred to as an upper case cover, and the second portion 212 may also be referred to as a lower case body.

In the battery 2, the amount of battery cell 3 may be single or plural. If there are a plurality of battery cells 3, the plurality of battery cells 3 may be connected in series or in parallel or in a mixed manner, wherein the mixed manner means that the plurality of battery cells 3 are connected both in series and in parallel. The plurality of battery cells 3 may be directly connected together in series or in parallel or in the mixed manner, and the entirety constituted by the plurality of battery cells 3 is accommodated inside the case 21. Of course, the plurality of battery cells 3 may also be connected in series or in parallel or in the mixed manner to form battery modules at first, and then a plurality of battery modules may be connected in series or in parallel or in the mixed manner to form an entirety and be accommodated inside the case 21.

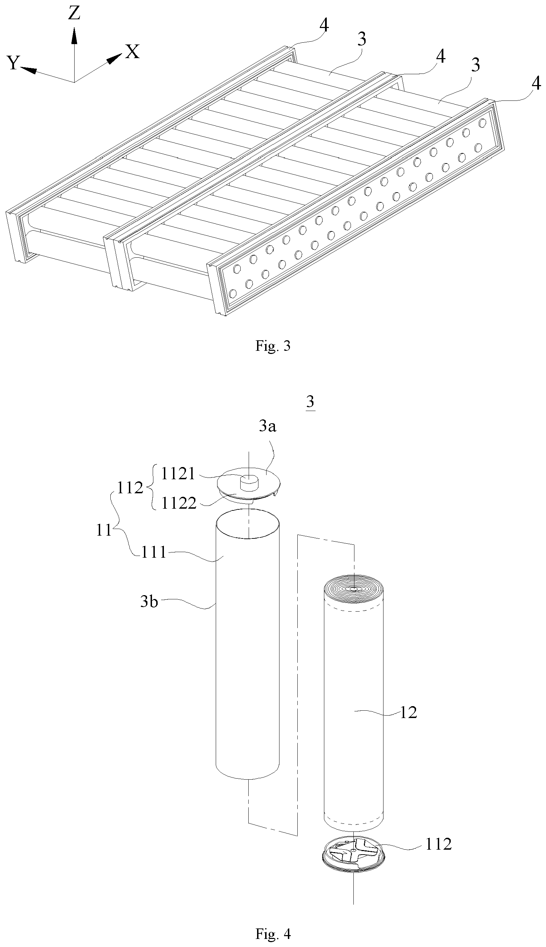

Fig. 3 is a schematic structural view of a plurality of battery cells 3 connected in series or in parallel provided by an embodiment of the application.

In some embodiments, as shown in Fig. 3, there are a plurality of battery cells 3, and the plurality of battery cells 3 are connected in series or in parallel or in the mixed manner to form battery modules at first. Then a plurality of battery modules are connected in series or in parallel or in the mixed manner to form an entirety and are accommodated in the case 21.

The plurality of battery cells 3 in a battery module may be electrically connected by a bus member to achieve a parallel or series or mixed connection of the plurality of battery cells 3 in the battery module.

Fig. 4 is a schematic explosive view of a battery cell 3 provided by some embodiments of the application.

As shown in Fig. 4, the battery cell 3 provided by the embodiments of the application includes an electrode assembly 12 and a housing assembly 11, and the electrode assembly 12 is accommodated in the housing assembly 11.

In some embodiments, the housing assembly 11 may also be used for accommodating an electrolyte, such as an electrolyte. The housing assembly 11 may be in a variety of structural forms.

In some embodiments, the housing assembly 11 may include a housing body 111 and a cap assembly 112. The housing body 111 is of a hollow structure with one side open. The cap assembly 112 caps the opening of the housing body 111 and forms a seal connection to form an accommodation cavity for accommodating the electrode assembly 12 and the electrolyte.

The housing body 111 may have various shapes such as a cylinder, a cuboid and the like. The shape of the housing body 111 may be determined according to a specific shape of the electrode assembly 12. For example, if the electrode assembly 12 is of a cylindrical structure, the housing body 111 may be selected to be cylindrical, and if the electrode assembly 12 is of a cuboid structure, the housing body 111 may be selected to be cuboid.

In some embodiments, the cap assembly 112 includes an end cap 1122 capping the opening of the housing body 111. The end cap 1122 may have various structures, such as a plate-like structure, a hollow structure with one end open and the like. For example, in Fig. 4, the housing body 111 is of a cylindrical structure, the end cap 1122 is of a plate-like structure, and the end cap 1122 caps the opening of the top of the housing body 111.

The end cap 1122 may be made of an insulating material (for example, plastic) or a conductive material (for example, metal). When the end cap 1122 is made of a metal material, the cap assembly 112 may further include an insulator. The insulator is located at a side of the end cap 1122 facing towards the electrode assembly 12 to insulate the end cap 1122 from the electrode assembly 12.

In some embodiments, the cap assembly 112 may also include electrode terminals 1121 mounted on the end cap 1122. There are two electrode terminals 1121 defined as a positive electrode terminal and a negative electrode terminal respectively. Both of the positive electrode terminal 1121 and the negative electrode terminal 1121 are used for electrically connecting with the electrode assembly 12 to output electrical energy generated by the electrode assembly 12.

In some embodiments, the housing assembly 11 may also be of other structure. For example, the housing assembly 11 includes a housing body 111 and two cap assemblies 112. The housing body 111 is of a hollow structure with two opposite sides open. Each of the cap assemblies 112 caps one opening of the housing body 111 correspondingly and forms a seal connection to form an accommodation cavity for accommodating the electrode assembly 12 and the electrolyte. In this configuration, one cap assembly 112 may be provided with two electrode terminals 1121 and the other cap assembly 112 may be provided with no electrode terminals 1121, or each of the two cap assemblies 112 may be provided with one electrode terminal 1121.

In the battery cell 3, the amount of electrode assembly 12 accommodated in the housing assembly 11 may be single or plural.

The electrode assembly 12 includes a positive electrode sheet, a negative electrode sheet, and a separator. The electrode assembly 12 may be a wound electrode assembly, a laminated electrode assembly, or an electrode assembly in other form.

In some embodiments, the electrode assembly 12 is a wound electrode assembly. Each of the positive electrode sheet, the negative electrode sheet and the separator is of a strip-like structure. In embodiments of the application, the positive electrode sheet, the separator and the negative electrode sheet may be sequentially laminated and wound two or more times to form the electrode assembly 12.

In other embodiments, the electrode assembly 12 is a laminated electrode assembly. In particular, the electrode assembly 12 includes a plurality of positive electrode sheets and a plurality of negative electrode sheets. The positive electrode sheets and the negative electrode sheets are alternately laminated and the laminated direction is parallel to a thickness direction of the positive electrode sheets and a thickness direction of the negative electrode sheets.

The battery 2 provided by embodiments of the application includes a case 21, a plurality of battery cells 3 and a fixation plate 4. The case 21 includes a first portion 211 and a second portion 212. The second portion 212 and the first portion 211 are capped by each other and form an accommodation cavity 21a. In the first direction X, the battery cells 3 are sequentially arranged with side surfaces 3a facing towards each other. In the second direction Y, the battery cells 3 are sequentially arranged with end surfaces 3b facing towards each other. The fixation plate 4 is disposed on at least one of the end surfaces 3b of the plurality of battery cells 3 and is used for fixing the battery cells 3. In a third direction Z, the fixation plate 4 connects the first portion 211 and connects the second portion 212. Each two of the first direction X, the second direction Y, and the third direction Z are perpendicular to each other.

In particular, the battery cells 3 may be cylindrical battery cells or cubic battery cells. The end surface 3b of the battery cell 3 may be a surface of the battery cell 3 on the side where the electrode terminal 1121 is provided or a surface arranged opposite to the surface on the side where the electrode terminal 1121 is provided. The battery cell 3 may be provided with the electrode terminals 1121 on one end surface 3b, or may be provided with the electrode terminals 1121 on both end surfaces 3b. In the second direction Y, the battery cells 3 are are sequentially arranged facing towards each other to facilitate electrical connection of the electrode terminals 1121 of each battery cell 3. For example, the electrode terminals 1121 on the end surface 3b of each battery cell 3 form an opposite arranged structure, and the two electrode terminals 1121 are connected in series to form an electrical connection. The amount of the battery cells 3 arranged in the second direction Y is not limited, and can be reasonably set according to specific requirements.

The side surface 3a of the battery cell 3 may be a surface of the battery cell 3 arranged around the end surfaces 3b. The side surface 3a is a cylindrical surface for a cylindrical battery cell, and the side surface 3a is a prismatic surface for a cubic battery cell. A plurality of battery cells 3 are provided to be sequentially arranged in the first direction X, and a plurality of battery cell strings formed in the second direction Y for example are arranged in the first direction X to form a battery array. Between the battery cells 3 arranged in the second direction Y, an electrical connection in series or parallel may be formed as required. It is also possible to provide at least two battery arrays sequentially stacked in the third direction Z. In particular, whether to provide battery cells 3 arranged in the third direction Z and the amount of battery cells 3 arranged in the third direction Z may be specifically set according to space conditions in the manufacturing process of the battery 2, and is not limited herein.

The fixation plate 4 is an elongated plate member extending in the first direction X. The battery cell 3 may be provided with a fixation plate 4 at one end surface 3b, or the battery cell 3 may also be provided with fixation plates 4 at both end surfaces 3b respectively, or a part of the battery cells 3 are each provided with a fixation plate 4 on one end surface 3b, and the other battery cells 3 are each provided with fixation plates 4 at both end surfaces 3b respectively, which is not limited herein.

The first portion 211 and the second portion 212 of the case 21 may be capped by each other in the first direction X or may be capped by each other in the third direction Z, which is not limited herein, as long as the accommodation cavity 21a can be formed.

In the third direction Z, the upper and lower end surfaces of the fixation plate 4 are connected to the first portion 211 and the second portion 212 simultaneously. Different fixation plates 4 may have either the same connection form or different connection forms to the case 21, which is not limited herein. It can be understood that each of the fixation plates 4 is fixedly connected to the first portion 211 and the second portion 212 of the case 21, so that the connection strength and rigidity of the battery can be effectively improved by virtue of the rigidity of the case 21.

The fixation plate 4 may be connected to the first portion 211 and the second portion 212 of the case 21 respectively in any one or more of the connection forms including snap-in, riveting, screw connection, adhering and welding, which is not limited herein, as long as it can enable connection of the fixation plate 4 to the first portion 211 and the second portion 212 respectively.

The connection form of the battery cells 3 and the fixation plate 4 may be any one or more of snap-in, riveting, screw connection, adhering and welding, which is not limited herein, as long as it can enable limited positioning of the battery cells 3.

The shape and structure of the fixation plate 4 are not limited as long as the battery cells 3 can be effectively limited.

In the battery 2 provided by the embodiment of the application, at least one end surface 3b of the battery cell 3 is provided with a fixation plate 4, and the fixation plate 4 is disposed to connect the first portion 211 and the second portion 212 of the case 21, so that the fixed connection of the battery cell 3 and the case 21 are achieved by virtue of the fixation plate 4. Since the fixation plates 4 are spaced apart in the second direction Y, the connection positions of the fixation plate 4 and the case 21 are spaced apart, and the spacing distance is small. By virtue of the fixed connection of the fixation plate 4 to the first portion 211 and the second portion 212 of the case 21, such arrangement can effectively increase the connection strength of the fixation plate 4 and the case 21, form an effective limiting function on the battery cells 3, reduce the risk of the battery 2 shaking during use and improve the service life of the battery 2.

The connection between the fixation plate 4 and the battery cell 3 may be a fixed connection or a detachable connection, which is not limited herein.

In some embodiments, the fixation plate 4 extends in the first direction X, and the battery cells 3 of the battery arranged in the first direction X are fixed to the fixation plate 4.

In particular, the fixation plate 4 is arranged to extend in the first direction X, and then any position of the fixation plate 4 in the first direction X can be connected to the case 21, so that it is possible to select a plurality of positions from the portion of the fixation plate 4 corresponding to the first portion 211 and the second portion 212 of the case 21 as required to achieve the connection of the fixation plate 4 and the case 21, and it is also possible to continuously connect the fixation plate 4 to the first portion 211 and the second portion 212 of the case 21 at the corresponding surfaces by welding, adhering or the like, which is advantageous for further improving the connection strength between the case 21 and the fixation plate 4. In addition, when that battery cells 3 are fixedly connected to the fixation plate 4, the battery cells 3 and the fixation plate 4 are fixed together, which is advantageous for increasing the connection strength between the battery cells 3 and the fixation plate 4 and increasing the fixed limiting effect of the fixation plate 4 on the battery cells 3, thereby reducing the risk of the battery cells 3 inside shaking during use of the battery 2.

In some embodiments, the fixation plate 4 is adhesively connected to the first portion 211 continuously at least in part in the first direction X.

In particular, the adhesively connected portion between the fixation plate 4 and the first portion 211 may be distributed in a plurality of spaced-apart sections, or may be adhesively connected in an entire section without any spacing inside. In the embodiments in which the fixation plate 4 is connected to the first portion 211 without spacing, the fixation plate 4 and the first portion 211 may be connected all along the first direction X of the fixation plate 4, or may also be adhesively connected partially in the first direction X of the fixation plate 4.

The fixation plate 4 and the first portion 211 are arranged to be adhesively connected, so that the connection is convenient and the appearance is aesthetical. The adhesive layer generated after adhesive connection occupies a small space and does not interfere with other structures. In addition, the connection form of adhesive connection increases the effective connectable area between the fixation plate 4 and the first portion 211, and effectively improves the connection strength between the fixation plate 4 and the first portion 211 of the case 21. In addition, the form of adhesive connection effectively ensures the structural integrity of the fixation plate 4 and the case 21, and improves the structural strength of the fixation plate 4 and the case 21.

In some embodiments, the fixation plate 4 is adhesively connected to the second portion 212 continuously at least in part in the first direction X.

In the same way as the embodiment in which the fixation plate 4 and the first portion 211 are adhesively connected continuously at least in part in the first direction X, the adhesively connected portion between the fixation plate 4 and the second portion 212 may be distributed in a plurality of spaced-apart sections, or may be adhesively connected in an entire section without any spacing inside. In the embodiments in which the fixation plate 4 is connected to the second portion 212 without spacing, the fixation plate 4 and the second portion 212 may be connected all along the first direction X of the fixation plate 4, or may also be adhesively connected partially in the first direction X of the fixation plate 4.

The fixation plate 4 and the second portion 212 are arranged to be adhesively connected, so that the connection is convenient and the appearance is aesthetical. The adhesive layer generated after adhesive connection occupies a small space and does not interfere with other structures. In addition, the connection form of adhesive connection increases the effective connectable area between the fixation plate 4 and the second portion 212, and effectively improves the connection strength between the fixation plate 4 and the second portion 212 of the case 21.

In the process of adhesive connection between the fixation plate 4 and the first portion 211, the surface of the fixation plate 4 facing towards the first portion 211 may be designed as a flat surface or a curved surface with a certain radian. It is also possible to provide a groove in one or both of two surfaces of the fixation plate 4 facing towards the first portion 211, which is not limited herein.

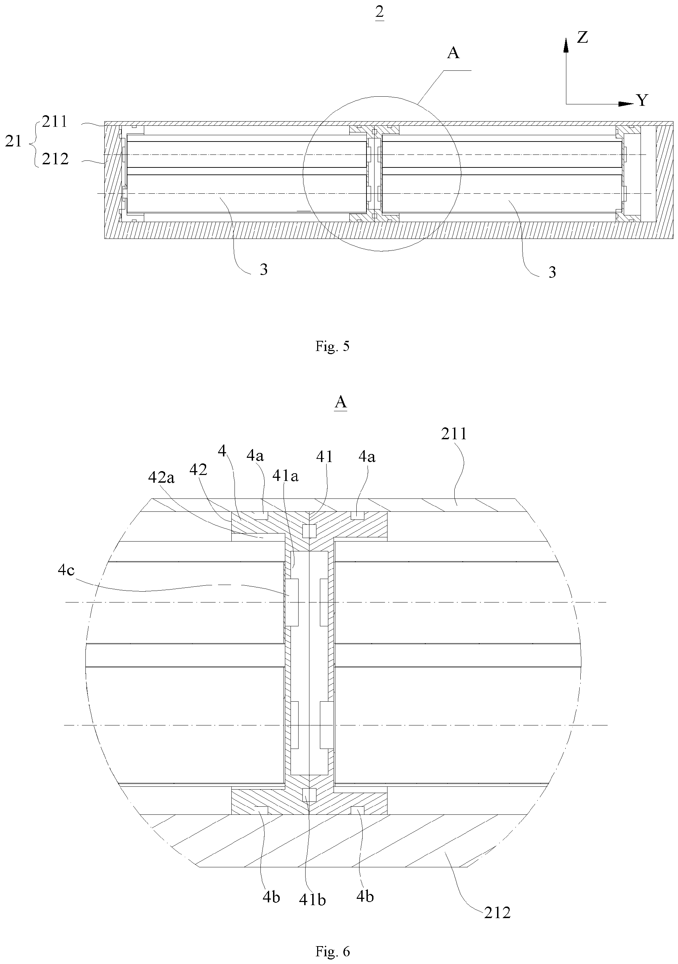

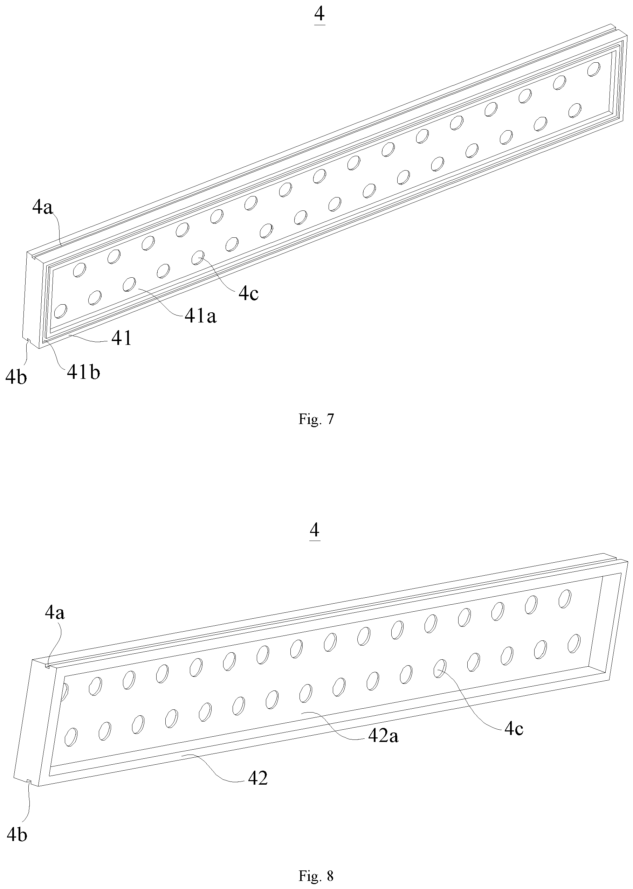

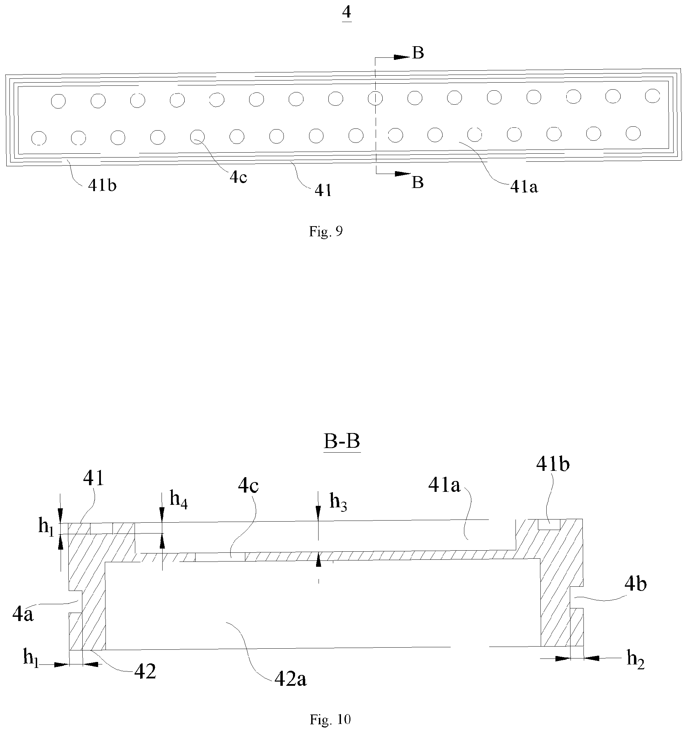

Fig. 5 shows a sectional view of a battery 2 provided by an embodiment of the application, and Fig. 6 shows an partial enlarged view at A in Fig. 5. Figs. 7 to 10 shows schematic structural views of a fixation plate 4 in a battery provided by an embodiment of the application.

In some optional embodiments, the surface of the fixation plate 4 facing towards the first portion 211 is formed with a first groove 4a for accommodating adhesive glue.

It can be understood that the first groove 4a is used for accommodating adhesive glue, so that the fixation plate 4 and the first portion 211 may have better adhesion after the fixation plate 4 and the first portion 211 are adhesively connected, and the adhesive area between the adhesive glue and the fixation plate 4 in the first groove 4a is larger, which is advantageous for improving stability of the adhesive connection.

In some optional embodiments, the surface of the fixation plate 4 facing towards the second portion 212 is formed with a second groove 4b for accommodating adhesive glue.

Like the first groove 4a, the second groove 4b is used for accommodating adhesive glue, so that the fixation plate 4 and the second portion 212 may have better adhesion after the fixation plate 4 and the second portion 212 are adhesively connected, and the adhesive area between the adhesive glue and the fixation plate 4 in the second groove 4b is larger, which is advantageous for further improving stability of the adhesive connection.

The shape of the first groove 4a and the second groove 4b is not limited, and may be any of a prismatic shape, a semi-cylindrical shape, a semi-elliptic cylindrical shape, or other shapes.

The depth of the first groove 4a and the second groove 4b is not limited either, as long as the adhesive connection of the fixed surface with the first portion 211 or the second portion 212 can be formed.

In some embodiments, the first groove 4a has a depth h₁ satisfying: 0.2mm≤h₁≤5mm. In particular, h₁ may be 0.2 mm, 1 mm, 2 mm, 2.5 mm, 3 mm, 4 mm, or 5 mm, etc.

If the depth h₁ of the first groove 4a satisfies the above relationship, the risk that the first groove 4a is too shallow to accommodate a sufficient amount of adhesive glue can be reduced, and at the same time the risk that the processing difficulty increases due to the too deep first groove 4a can be reduced. In this way, the machinability of the fixation plate 4 is improved while the adhesive strength between the fixation plate 4 and the second portion 212 of the case 21 is secured.

In some embodiments, the second groove 4b has a depth h₂ satisfying: 0.2mm≤h₂≤5mm. As an example, h₂ may be 0.2 mm, 1 mm, 2 mm, 2.5 mm, 3 mm, 4 mm, or 5 mm, etc.

The arrangement that the depth h₂ of the second groove 4b satisfies the above relationship can reduce the risk that the second groove 4b is too shallow to accommodate a sufficient amount of adhesive glue, and at the same time can reduce the risk that the processing difficulty increases due to the too deep second groove 4b. In this way, the machinability of the fixation plate 4 is improved while the adhesive strength between the fixation plate 4 and the second portion 212 of the case 21 is secured.

It can be understood that, in the embodiments in which two adjacent end surfaces 3b of two battery cells 3 adjacent in the second direction Y are each provided with a fixation plate 4, the two corresponding adjacent fixation plates 4 may be spaced apart or may also abut or connect with each other, which is not limited herein.

In some optional embodiments, in the second direction Y, the adjacent battery cells 3 are fixedly connected to the fixation plates 4 respectively, and the adjacent fixation plates 4 are fixedly connected to each other.

In particular, the form of fixed connection of the adjacent fixation plates 4 may be one or more of screw connection, riveting, adhering and welding. The arrangement of fixedly connecting the adjacent fixation plates 4 further increases the connection strength of the internal structure of the battery 2, and the fixation plates 4 have a better limiting effect on the battery cells 3.

In some embodiments, the battery cell 3 includes electrode terminals 1121 protruding from the end surface 3b. The fixation plate 4 is provided with a through hole 4c, the end surface 3b abuts the fixation plate 4, and at least a part of the electrode terminal 1121 is accommodated in the through hole 4c.

In particular, the battery cell 3 may be provided with the electrode terminals 1121 on one end surface 3b, or may be provided with the electrode terminals 1121 on both end surfaces 3b. The plurality of electrode terminals 1121 arranged in the first direction X, or the plurality of battery cells 3 arranged in the first direction X and in the third direction Z at the same time, are connected in series or in parallel by a bus member to form a battery module. Two battery modules adjacent in the second direction Y realize series connection or parallel connection between the plurality of battery cells 3 by at least a part of the plurality of battery cells 3. The connection between the battery cells 3 adjacent in the second direction Y may be connected by the electrode terminals 1121.

Therefore, at least a part of the electrode terminal 1121 is accommodated in the through hole 4c, which facilitates electrical connection between the electrode terminals 1121 adjacent in the second direction Y, and the through hole 4c has a better limiting effect on the battery cell 3.

The end surface 3b of the battery cell 3 may be spaced apart from the fixation plate 4, or may abut or be connected to the fixation plate 4, as long as the fixation plate 4 can limit the battery cell 3. In addition, the battery cells 3 arranged in the first direction X may be connected in series or in parallel by a bus member. The bus member may be disposed between the fixation plate 4 and the end surfaces 3b of the battery cells 3, or may be disposed on a side of the fixation plate 4 facing away from the end surfaces 3b of the battery cells 3, which is not limited herein.

In some embodiments, the end surface 3b is adhered to the fixation plate 4, a first surface 41 of the fixation plate 4 fixedly connected to the end surface 3b of the battery cell 3 facing away from the end surface 3b is provided with a first recess 41a, and the through hole 4c penetrates a bottom wall of the first recess 41a.

The first recess 41a may be provided in the first surface 41 of the fixation plate 4 facing away from the end surface 3b, and the fixation plate 4 may be provided with through holes 4c corresponding to each of the electrode terminals 1121 of the battery cells 3. In this way, the bus member for connecting the plurality of battery cells 3 may be disposed in the first recess 41a, and in addition, the electrode terminals 1121 adjacent in the second direction Y may be electrically connected by an intermediate connector. The intermediate connector may also be disposed in the first recess 41a, so that the compactness of the internal structure of the battery 2 can be improved and the volumetric energy density of the battery 2 can be increased.

In some embodiments, the electrode terminal 1121 connected to the fixation plate 4 at least partially protrudes from the bottom wall of the first recess 41a and is accommodated in the first recess 41a, and does not go beyond the first surface 41.

The arrangement that the electrode terminals 1121 at least partially protrude from the bottom wall of the first recess 41a is more advantageous for positioning the battery cells 3 by the fixation plate 4, and the electrode terminals 1121 in the first recess 41a can be more conveniently connected to each other by the bus member.

The electrode terminals 1121 may be flush with the first surface 41 or may be located inside the first recess 41a. In some embodiments, the arrangement that the electrode terminals 1121 inside the first recess 41a is advantageous for ensuring that the electrode terminals 1121 between the battery cells 3 adjacent in the second direction Y do not communicate with each other, which is advantageous for reducing the risk of short-circuiting between the battery cells 3. In some other embodiments, two electrode terminals 1121 adjacent in the second direction Y are required to be electrically connected to each other, and at this time, the corresponding electrode terminals 1121 are arranged to be flush with the first surface 41, which is advantageous for achieving electrical connection of the battery cells 3 adjacent in the second direction Y

In some embodiments, the first recess 41a has a depth h₃ satisfying: 5mm≤h₃≤10mm. As an example, h₃ may be 5 mm, 6 mm, 7 mm, 8 mm, 9 mm, or 10 mm, etc.

The arrangement that the depth h₃ of the first recess 41a satisfies the above numerical range reduces the risk that the first recess 41a occupies an excessively large space in the second direction Y while ensuring that the first recess 41a sufficiently accommodates the relevant structure, thereby improving the structural compactness of the battery 2.

Since the fixation plates 4 adjacent in the second direction Y may be or may not be connected to each other, and in the embodiments of the connection, the connection form of the two is not limited, the structural shapes of the first surfaces 41 of the adjacent fixation plates 4 are not limited, and may be specifically designed according to a specific connection form.

In some optional embodiments, the first surface 41 is further provided with a second recess 41b disposed outside the first recess 41a in the third direction Z and used to accommodate adhesive glue for connecting the adjacent fixation plates 4 to each other.

In this way, the adhesive connection between the fixation plates 4 adjacent in the second direction Y is achieved, and the arrangement that the second recess 41b is provided and adhesive glue is accommodated in the second recess 41b is advantageous for increasing the adhesive area between the adhesive glue and the fixation plate 4 and thereby improving the adhesive strength. Meanwhile, the adhesive glue is disposed in the second recess 41b, so that the space of the battery 2 in the second direction Y occupied by adhesive connection can be reduced, which is advantageous for improving the volumetric energy density of the battery 2.

In some optional embodiments, the second recess 41b has a depth h₄ satisfying: 0.2mm≤h₄≤5mm. As an example, h₄ may be 0.2 mm, 1 mm, 2 mm, 2.5 mm, 3 mm, 4 mm, or 5 mm, etc.

The arrangement that the depth h₄ of the second recess 41b satisfies the above relationship may reduce the risk that the second recess 41b is too shallow to accommodate a sufficient amount of adhesive glue, and at the same time can reduce the risk that the processing difficulty increases due to the too deep second recess 41b. In this way, the machinability of the fixation plate 4 is improved while the adhesive strength of the fixation plates 4 is secured.

In some embodiments, the fixation plate 4 fixedly connected to the end surfaces 3b of the battery cells 3 includes a second surface 42 facing towards the end surfaces 3b, and the second surface 42 is provided with a third recess 42a. The end surfaces 3b are accommodated in the third recess 42a.

By providing the third recess 42a and accommodating the end surfaces 3b in the third recess 42a, and the recess can form positioning for the battery cells 3 to improve the limiting effect of the fixation plate 4 on the battery cells 3 and further reduce the risk of the battery cells 3 shaking.

It can be understood that it is possible to arrange each battery cell 3 to correspond one third recess 42a, or to arrange a plurality of battery cells 3 to correspond one third recess 42a, both of which can improve the limiting effect of the fixation plate 4 on the battery cells 3.

The end surfaces 3b of the battery cells 3 and the bottom wall of the third recessed portion 42a may abut each other or may be fixedly connected to each other in a way of adhesive connection or the like, which is not limited herein.

In some optional embodiments, the end surfaces 3b of the battery cells 3 are adhered to the bottom wall of the third recess 42a.

In this way, the connection strength between the battery cells 3 and the fixation plate 4 can be improved, the risk of the battery cells 3 shaking with respect to the fixation plate 4 can be further reduced, and the structural stability of the battery 2 can be increased.

The amount of the corresponding through holes 4c on one fixation plate 4 may be less than or equal to the amount of the corresponding electrode terminals 1121, which is not limited herein.

In some optional embodiments, the through holes 4c correspond to the electrode terminals 1121 of the battery cells 3 one by one.

In particular, each electrode terminal 1121 corresponds to one through hole 4c, and is disposed in the through hole 4c. Thus, the through holes 4c make place for the position of the electrode terminals 1121, so that the fixation plate 4 and the end surfaces 3b of the battery cells 3 are better fitted, improving the limiting effect in the battery cells 3.

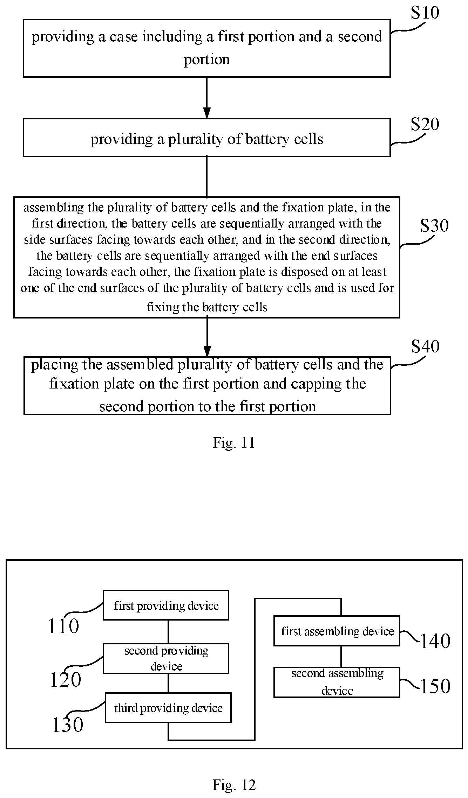

Fig. 11 is a flow chart of a manufacturing method of a battery provided by an embodiment of the application.

The manufacturing method of a battery provided by an embodiment of the application includes:
S10, providing a case 21 including a first portion 211 and a second portion 212;
S20, providing a plurality of battery cells 3;
S30, providing a fixation plate 4;
S40, assembling the plurality of battery cells 3 and the fixation plate 4, wherein in the first direction X, the battery cells 3 are sequentially arranged with the side surfaces 3a facing towards each other, and in the second direction Y, the battery cells 3 are sequentially arranged with the end surfaces 3b facing towards each other. The fixation plate 4 is disposed on at least one of the end surfaces 3b of the plurality of battery cells 3 and is used for fixing the battery cells 3.

S50, placing the assembled plurality of battery cells 3 and the fixation plate 4 on the first portion 211 and capping the second portion 212 to the first portion 211, wherein the fixation plate 4 connects the first portion 211 and connects the second portion 212 in the third direction Z, and each two of the first direction X, the second direction Y and the third direction Z are perpendicular to each other.

Fig. 12 is a schematic structural view of a manufacturing system of a battery provided by an embodiment of the application.

The manufacturing system 100 of a battery provided by an embodiment of the application includes:
a first providing device 110 for providing a case 21 including a first portion 211 and a second portion 212;
a second providing device 120 for providing a plurality of battery cells 3;
a third providing device 130 for providing a fixation plate 4;

The first assembling device 140 is used for assembling the plurality of battery cells 3 and the fixation plate 4, wherein in the first direction X, the battery cells 3 are sequentially arranged with the side plates facing towards each other. In the second direction Y, the battery cells 3 are sequentially arranged with end surfaces 3b facing towards each other. The fixation plate 4 is disposed on at least one of the end surfaces 3b of the plurality of battery cells 3 and is used for fixing the battery cells 3.

The second assembling device 150 is used for placing the assembled plurality of battery cells 3 and the fixation plate 4 on the first portion 211 and capping the second portion 212 to the first portion 211, wherein, the fixation plate 4 connects the first portion 211 and connects the second portion 212 in the third direction Z, and each two of the first direction X, the second direction Y, and the third direction Z are perpendicular to each other.

For the relevant structure of the battery cell 3 manufactured by the manufacturing system 100, reference may be made to the battery cell 3 provided by the above various embodiments.

It should be noted that, in the case of no contradiction, the embodiments in the application and the features in the embodiments may be combined with each other.

At last, it should be appreciated that the above embodiments are only used to illustrate the technical solutions of the application but not to limit the same. A person of ordinary skill in the art is to understand that it is still possible to modify the technical solutions described in the above embodiments or equivalently replace some of the technical features thereof while the modifications and replacements shall not render the substance of the corresponding technical solutions deviate from the spirit and scope of the technical solutions in the various embodiments of the application.

## Claims

1. A battery, comprising:
a case comprising a first portion and a second portion, the second portion and the first portion being capped by each other and forming an accommodation cavity;
a plurality of battery cells, in a first direction, the battery cells being sequentially arranged with side surfaces facing towards each other, in a second direction, the battery cells being sequentially arranged with end surface facing toward each other; and
a fixation plate disposed on at least one of the end surfaces of the plurality of battery cells and for fixing the battery cells, in a third direction, the fixation plate connecting the first portion and connecting the second portion, each two of the first direction, the second direction and the third direction being perpendicular to each other.

2. The battery according to claim 1, wherein the fixation plate extends in the first direction, and the battery cells of the battery arranged in the first direction are fixed to the fixation plate.

3. The battery according to claim 1, wherein the fixation plate and the first portion are adhesively connected continuously at least in part in the first direction; and/or the fixation plate and the second portion are adhesively connected continuously at least in part in the first direction.

4. The battery according to claim 3, wherein
a surface of the fixation plate facing towards the first portion is formed with a first groove for accommodating adhesive glue; and/or
a surface of the fixation plate facing towards the second portion is formed with a second groove for accommodating adhesive glue.

5. The battery according to claim 4, wherein
the first groove has a depth h₁ satisfying: 0.2mm≤h₁≤5mm; and/or
the second groove has a depth h₂ satisfying: 0.2mm≤h₂≤5mm.

6. The battery according to any of claims 1 to 5, wherein in the second direction, the adjacent battery cells are fixedly connected to the fixation plates respectively, and the adjacent fixation plates are fixedly connected to each other.

7. The battery according to any of claims 1-6, wherein
the battery cell comprises electrode terminals protruding from the end surface;
the fixation plate is provided with a through hole, the end surface abuts the fixation plate, and at least a part of the electrode terminal is accommodated in the through hole.

8. The battery according to claim 7, wherein the end surface is adhered to the fixation plate;
the fixation plate fixedly connected to the end surface of the battery cell is provided with a first recess on a first surface facing away from the end surface, and the through hole penetrates a bottom wall of the first recess.

9. The battery according to claim 8, wherein the electrode terminal fixedly connected to the fixation plate at least partially protrudes from the bottom wall of the first recess and is accommodated in the first recess, and does not go beyond the first surface.

10. The battery according to claim 8, wherein the first recess has a depth h₃ satisfying: 5mm≤h₃≤10mm.

11. The battery according to claim 7 or 8, wherein the first surface is further provided with a second recess disposed outside the first recess in the third direction and used to accommodate adhesive glue for connecting the adjacent fixation plates to each other.

12. The battery according to claim 11, wherein the second recess has a depth h₄ satisfying: 0.2mm≤h₄≤5mm.

13. The battery according to any of claims 7-12, wherein
the fixation plate fixedly connected to the end surface of the battery cell comprises a second surface facing towards the end surface, the second surface being provided with a third recess,
the end surface is accommodated in the third recess and adhered to a bottom wall of the third recess.

14. The battery according to any of claims 7-13, wherein the through holes correspond to the electrode terminals of the battery cells one by one.

15. An electric device comprising a battery according to any of claims 1-14 used to provide electrical energy.

16. A manufacturing method for a battery, comprising:
providing a case comprising a first portion and a second portion;
providing a plurality of battery cells;
providing a fixation plate;
assembling the plurality of battery cells and the fixation plate, wherein in a first direction, the battery cells are sequentially arranged with side surfaces facing towards each other, in a second direction, the battery cells are sequentially arranged with end surfaces facing towards each other, and the fixation plate is disposed on at least one of the end surfaces of the plurality of battery cells and is used for fixing the battery cells;
placing the assembled plurality of battery cells and the fixation plate on the first portion and capping the second portion to the first portion, wherein in a third direction, the fixation plate connects the first portion and connects the second portion, and each two of the first direction, the second direction and the third direction are perpendicular to each other.

17. A manufacturing system for a battery, comprising:
a first providing device for providing a case comprising a first portion and a second portion;
a second providing device for providing a plurality of battery cells;
a third providing device for providing a fixation plate;
a first assembling device for assembling the plurality of battery cells and the fixation plate, wherein in a first direction, the battery cells are sequentially arranged with side surfaces to facing towards each other, in a second direction, the battery cells are sequentially arranged with end surfaces facing towards each other, and the fixation plate is disposed on at least one of the end surfaces of the plurality of battery cells and is used for fixing the battery cells; a second assembling device for placing the assembled plurality of battery cells and the fixation plate on the first portion and capping the second portion to the first portion, wherein in a third direction, the fixation plate connects the first portion and connects the second portion, and each two of the first direction, the second direction and the third direction are perpendicular to each other.
